(19)

Europäisches Patentamt

European Patent Office

Office européen des brevets

(11) **EP 4 593 098 A1**

(12) **EUROPEAN PATENT APPLICATION**
published in accordance with Art. 153(4) EPC

(43) Date of publication:
**30.07.2025 Bulletin 2025/31**

(21) Application number: **24767443.5**

(22) Date of filing: **08.03.2024**

(51) International Patent Classification (IPC):
*H01M 4/04* (2006.01)    *H01M 50/536* (2021.01)
*B23K 26/08* (2014.01)    *B23K 26/062* (2014.01)
*B23K 26/38* (2014.01)

(52) Cooperative Patent Classification (CPC):
**B23K 26/062; B23K 26/08; B23K 26/38;
H01M 4/04; H01M 50/536;** Y02E 60/10

(86) International application number:
**PCT/KR2024/002981**

(87) International publication number:
**WO 2024/186155 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023  KR 20230031183
28.02.2024  KR 20240028734**

(71) Applicant: **LG Energy Solution, Ltd.
Seoul 07335 (KR)**

(72) Inventors:
• **LEE, Seo Jun**
  **Daejeon 34122 (KR)**
• **KIM, Tae Su**
  **Daejeon 34122 (KR)**
• **KIM, Gil Woo**
  **Daejeon 34122 (KR)**
• **LEE, Byung Hee**
  **Daejeon 34122 (KR)**

(74) Representative: **Plasseraud IP
104 Rue de Richelieu
CS92104
75080 Paris Cedex 02 (FR)**

(54) **ELECTRODE SHEET PROCESSING APPARATUS AND ELECTRODE SHEET PROCESSING METHOD USING SAME**

(57)    Disclosed are an electrode sheet machining apparatus and an electrode sheet machining method using the same, and more particularly an electrode sheet machining apparatus including a transfer roller configured to supply an electrode sheet, a drum configured to be in tight contact with one surface of the supplied electrode sheet, and a laser radiator configured to radiate a laser beam toward the drum, wherein the drum includes a first drum configured to be rotated together with the supplied electrode sheet, a second drum located at one side or opposite sides of the first drum, the second drum configured to rotate or remain stationary, and a pattern jig removably mounted to the second drum, the pattern jig having a first opening configured to allow the laser beam to pass therethrough.

[FIG. 2]

**Description**

[Technical Field]

This application claims the benefit of priority to Korean Patent Application No. 2023-0031183 filed on March 9, 2023 and Korean Patent Application No. 2024-0028734 filed on February 28, 2024, the disclosures of which are incorporated herein by reference in their entirety.

The present invention relates to an electrode sheet machining apparatus and an electrode sheet machining method using the same, and more particularly to an electrode sheet machining apparatus for machining an uncoated portion of an electrode sheet to form an electrode tab and an electrode sheet machining method using the same.

[Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a process in which an electrode tab is formed at an electrode, the electrode is notched by applying physical force to the electrode using a punch or a cutter, and the electrode tab of the electrode formed by notching is damaged or bent by the physical force, resulting in poor notching quality.

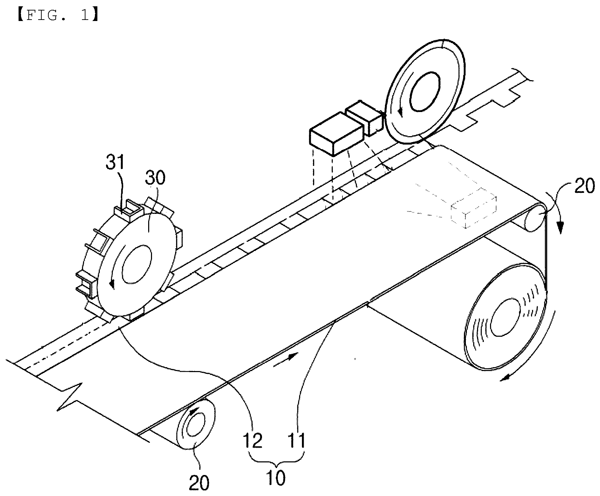

FIG. 1 is a perspective view of a conventional electrode sheet notching facility. As showing in FIG. 1, an electrode sheet 10 including a coated portion 11 and an uncoated portion 12 is continuously transferred by a transfer device 20, and notching is carried out by rotating a notching device 30 having a notching blade 31 formed on an outer surface thereof.

However, when notching is carried out to form an electrode tab, the notching blade 31 presses the uncoated portion 12 of the electrode sheet 10, whereby defects, such as crushing or curling of the electrode tab or unevenness of a cut part due to insufficient cutting force, may occur.

(Prior Art Document)

(Patent Document 1) Korean Patent Application Publication No. 2021-0130541

[Disclosure]

[Technical Problem]

The present invention has been made in view of the above problems, and it is an object of the present invention to provide an electrode sheet machining apparatus capable of inhibiting defects of an electrode tab in a notching process for forming the electrode tab at an electrode sheet and an electrode sheet machining method using the same.

[Technical Solution]

In order to accomplish the above object, an electrode sheet machining apparatus according to the present invention includes a transfer roller (200) configured to supply an electrode sheet (100), a drum (300) configured to be in tight contact with one surface of the supplied electrode sheet (100), and a laser radiator (400) configured to radiate a laser beam toward the drum (300), wherein the drum (300) includes a first drum (310) configured to be rotated together with the supplied electrode sheet (100), a second drum (320) located at one side or opposite sides of the first drum (310), the second drum configured to rotate or remain stationary, and a pattern jig (330) removably mounted to the second drum (320), the pattern jig having a first opening (331a) configured to allow the laser beam to pass therethrough.

Also, in the electrode sheet machining apparatus according to the present invention, the electrode sheet (100) may include a coated portion (110) having an active material applied thereto and an uncoated portion (120) having no active material applied thereto, and the second drum (320) may be configured to be located by at least a part of the uncoated portion (120) of the electrode sheet (100).

Also, in the electrode sheet machining apparatus according to the present invention, the pattern jig (330) may include a first surface (331) in tight contact with a part of the uncoated portion (120), the first surface having the first opening (331a), and a pair of second surfaces (332) located at opposite sides of the first surface (331).

Also, in the electrode sheet machining apparatus according to the present invention, the first surface (331) of the pattern jig (330) may have a curvature in a circumferential direction of the second drum (320).

Also, in the electrode sheet machining apparatus according to the present invention, at least a part of the first surface (331) of the pattern jig (330) may overlap a depth of focus (DOF) section of the laser beam defined by Relational expression 1 below:

$$\mathrm{DOF} = \frac{8\lambda\mathrm{M}^2}{\pi}\sqrt{\mathrm{p}^2 - 1}\ \left(\frac{\mathrm{f}}{\mathrm{d}}\right)^2 \quad \text{(Relational expression 1)}$$

where $\lambda$ is the wavelength of the laser beam, $M^2$ is the mode parameter of the laser beam (beam mode parameter), p is the tolerance factor, f is the focal length of a lens, and d is the diameter of the laser beam that is radiated (input beam parameter).

Also, in the electrode sheet machining apparatus according to the present invention, at least a part of the first surface (331) of the pattern jig (330) may have the same curvature as the second drum (320).

Also, in the electrode sheet machining apparatus according to the present invention, the curvature of the first surface (331) and the curvature of the second drum (320) may be the same.

Also, in the electrode sheet machining apparatus according to the present invention, the transfer roller (200) may include a first transfer roller (210) and a second transfer roller (220), and the first transfer roller (210) may be located before the drum (300) and the second transfer roller (220) may be located after the drum (300) and configured to change a transfer path of the electrode sheet 100.

Also, the electrode sheet machining apparatus according to the present invention may further include a detection unit (500) configured to determine whether the laser beam moves along an edge of the first opening (331a) of the pattern jig (330).

Also, in the electrode sheet machining apparatus according to the present invention, the detection unit (500) may be a light meter.

In addition, an electrode sheet machining method according to the present invention includes a first step of supplying an electrode sheet (100) to a drum, the electrode sheet (100) including a coated portion (110) having an active material applied thereto and an uncoated portion (120) located along one or each of opposite edges of the coated portion (110), the uncoated portion having no active material applied thereto, a second step of radiating a laser beam to the uncoated portion (120) to cut a part of the uncoated portion (120) forming an electrode tab, and a third step of collecting the electrode sheet (100) with the electrode tab, wherein the drum (300) includes a first drum

(310) in tight contact with the coated portion (110) of the supplied electrode sheet (100), a second drum (320) located at one side or opposite sides of the first drum (310), the second drum being in tight contact with at least a part of the uncoated portion (120), and a pattern jig (330) removably mounted to the second drum (320), the pattern jig having a first opening (331a) configured to allow the laser beam to pass therethrough.

Also, in the electrode sheet machining method according to the present invention, a first surface (331) of the pattern jig (330) in tight contact with a part of the uncoated portion (120) may be curved, and the second step includes radiating the laser beam to a depth of focus (DOF) section of the laser beam defined by Relational expression 1 below:

$$\mathrm{DOF} = \frac{8\lambda\mathrm{M}^2}{\pi}\sqrt{\mathrm{p}^2 - 1}\ \left(\frac{\mathrm{f}}{\mathrm{d}}\right)^2 \quad \text{(Relational expression 1)}$$

where $\lambda$ is the wavelength of the laser beam, $M^2$ is the mode parameter of the laser beam (beam mode parameter), p is the tolerance factor, f is the focal length of a lens, and d is the diameter of the laser beam that is radiated (input beam parameter).

Also, in the electrode sheet machining method according to the present invention, at least a part of the first surface (331) of the pattern jig (330) may overlap the depth of focus (DOF) section of the laser beam.

Also, in the electrode sheet machining method according to the present invention, in the second step, at least a part of the laser beam is radiated while moving along an inner edge of the first opening (331a) of the pattern jig (330).

Also, the electrode sheet machining method according to the present invention may further include a step of determining whether the laser beam moves along the edge of the first opening (331a) of the pattern jig (330) between the second step and the third step.

[Advantageous Effects]

As is apparent from the above description, an electrode sheet machining apparatus according to the present invention and an electrode sheet machining method using the same have the advantage that an electrode tab is formed using a laser beam, whereby it is possible to inhibit defects in the quality of the electrode tab, such as crushing, curling, and unevenness in the vicinity of a cut part.

In addition, the electrode sheet machining apparatus according to the present invention and the electrode sheet machining method using the same have the advantage that a second drum having a pattern jig mounted thereto supports an uncoated portion in tight contact therewith, whereby it is possible to prevent machining defects due to sagging of the uncoated portion.

Furthermore, in the electrode sheet machining apparatus according to the present invention and the electrode sheet machining method using the same, the laser beam moves within the area overlapping the depth of focus (DOF), whereby it is possible to secure stable cutting quality and to prevent unnecessary irradiation, and therefore it is possible to reducing machining costs.

[Description of Drawings]

FIG. 1 is a perspective view of a conventional electrode sheet notching facility.

FIG. 2 is a perspective view of an electrode machining apparatus according to a first embodiment of the present invention.

FIG. 3 is a side sectional view of FIG. 2.

FIG. 4 is a perspective view of a pattern jig constituting the electrode machining apparatus according to the present invention.

FIG. 5 is a front view of the pattern jig shown in FIG. 4.

FIG. 6 is a view illustrating the depth of focus of a laser beam.

FIG. 7 is a view showing a first example of the relationship between the depth of focus and a machining area in the electrode machining apparatus according to the present invention.

FIG. 8 is a view showing a second example of the relationship between the depth of focus and the machining area in the electrode machining apparatus according to the present invention.

FIG. 9 is a view showing a third example of the relationship between the depth of focus and the machining area in the electrode machining apparatus according to the present invention.

FIG. 10 is a view showing a fourth example of the relationship between the depth of focus and the machining area in the electrode machining apparatus according to the present invention.

FIG. 11 is a perspective view of an electrode machining apparatus according to a second embodiment of the present invention.

FIG. 12 is a flowchart illustrating an electrode sheet machining method according to the present invention.

FIG. 13 is a view illustrating the movement path of a laser beam during machining of an electrode sheet.

[Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode sheet machining apparatus according to the present invention and an electrode sheet machining method using the same will be described with reference to the accompanying drawings.

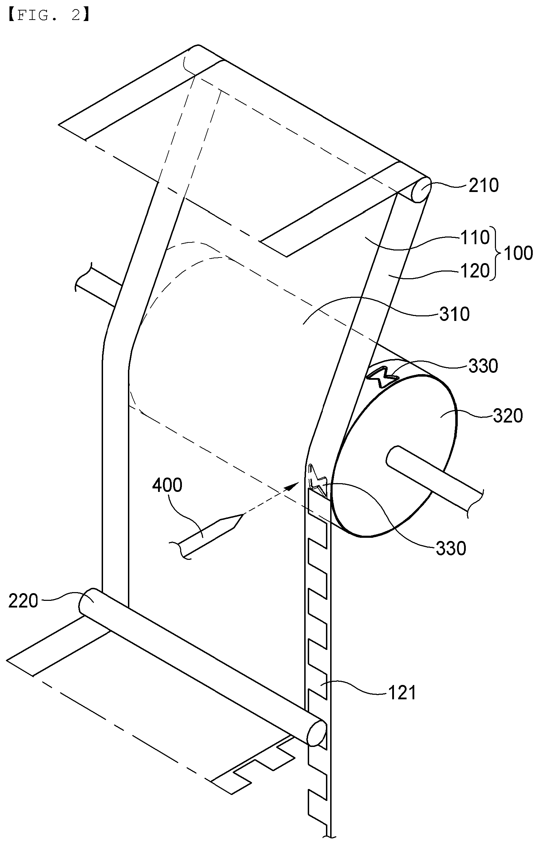

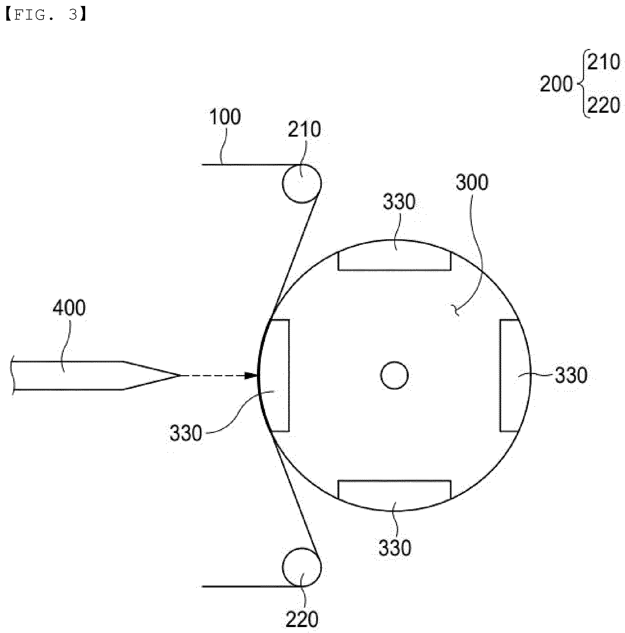

FIG. 2 is a perspective view of an electrode machining apparatus according to a first embodiment of the present invention, and FIG. 3 is a side sectional view of FIG. 2.

As shown in FIGs. 2 and 3, the electrode sheet machining apparatus according to the first embodiment of the present invention includes a transfer roller 200, a drum 300, and a laser radiator 400.

First, the transfer roller 200, which is configured to supply an electrode sheet 100 to the drum 300 and to transfer the machined electrode sheet 100, may include a first transfer roller 210 and a second transfer roller 220.

For example, the first transfer roller 210 may be located in front of the drum 300 and the second transfer roller 220 may be located behind the drum 300 to supply and transfer the electrode sheet 100, and may be disposed so as to change the transfer path of the electrode sheet 100 as needed. Although two transfer rollers 200 are shown in the figures, one transfer roller or three or more transfer rollers may be provided.

The electrode sheet 100 may be a negative electrode sheet or a positive electrode sheet, and may include a coated portion 110 having an active material applied thereto and an uncoated portion 120 having no active material applied thereto.

The negative electrode sheet is manufactured by applying a slurry mixture of a negative electrode active material and a binder to a negative electrode current collector made of copper.

As the negative electrode active material, for example, there may be used carbon, such as non-graphitizing carbon or graphite-based carbon; a metal composite oxide, such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2, and 3 elements of the periodic table, halogen; $0 < x \leq 1$; $1 \leq y \leq 3$; $1 \leq z \leq 8$); lithium metal; a lithium alloy; a silicon-based alloy; a tinbased alloy; a metal oxide, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, or $Bi_2O_5$; a conductive polymer, such as polyacetylene; a Li-Co-Ni-based material; or a Si-based material, such as Si, SiO, $SiO_2$, or a mixture thereof; however, the present invention is not limited thereto.

The positive electrode sheet is manufactured by applying a slurry mixture of a positive electrode active material and a binder to a positive electrode current collector made of aluminum.

The positive electrode active material may be constituted, for example, by a layered compound, such as a lithium cobalt oxide ($LiCoO_2$) or a lithium nickel oxide ($LiNiO_2$), or a compound substituted with one or more transition metals; a lithium manganese oxide represented by the chemical formula $Li_{1+x}Mn_{2-x}O_4$ (where x = 0 to 0.33) or a lithium manganese oxide, such as $LiMnO_3$, $LiMn_2O_3$, or $LiMnO_2$; a lithium copper oxide ($Li_2CuO_2$); a vanadium oxide, such as $LiV_3O_8$, $LiFe_3O_4$, $V_2O_5$, or $Cu_2V_2O_7$; a Ni-sited lithium nickel oxide represented by the chemical formula $LiNi_{1-x}M_xO_2$ (where M = Co, Mn, Al, Cu, Fe, Mg, B, or Ga, and x = 0.01 to 0.3); a lithium manganese composite oxide represented by the chemical formula $LiMn_{2-x}M_xO_2$ (where M = Co, Ni, Fe, Cr, Zn, or Ta, and x = 0.01 to 0.1) or the chemical formula $Li_2Mn_3MO_8$ (where M = Fe, Co, Ni, Cu, or Zn); $LiMn_2O_4$ in which a part of Li in the chemical formula is replaced by alkaline earth metal ions; a disulfide compound; or $Fe_2(MoO_4)_3$; however, the present invention is not limited thereto.

The drum 300 is configured to support the electrode sheet 100 supplied by the transfer roller 200, and at least a part of the drum is in tight contact with one surface of the electrode sheet 100.

Specifically, the drum 300 may include a first drum 310, a second drum 320 located at one side or opposite sides of the first drum 310, and at least one pattern jig 330 removably mounted to the second drum 320.

When the electrode sheet 100 is continuously supplied, the first drum 310 preferably remains in tight contact with the electrode sheet 100, and more preferably rotates with the electrode sheet 100. On the other hand, the second drum 320 remains stationary because the pattern jig 330 is mounted thereto.

The second drum 320 is preferably provided with a plurality of pattern jigs 330 of the same shape such that, if debris generated during laser machining is attached to any one of the pattern jigs 330 or the pattern jig is damaged by the debris, the machining can be continuously carried out using another of the pattern jigs 330 located adjacent to the pattern jig having the debris attached thereto or damaged by the debris.

Of course, the pattern jig 330 having the debris attached thereto may be reused by cleaning, and the second drum 320 is rotated when the position of the pattern jig 330 is to be changed.

As described above, the first drum 310 and the second drum 320 may be driven individually, and a means configured to drive the drums is known in the art, and therefore a detailed description thereof will be omitted.

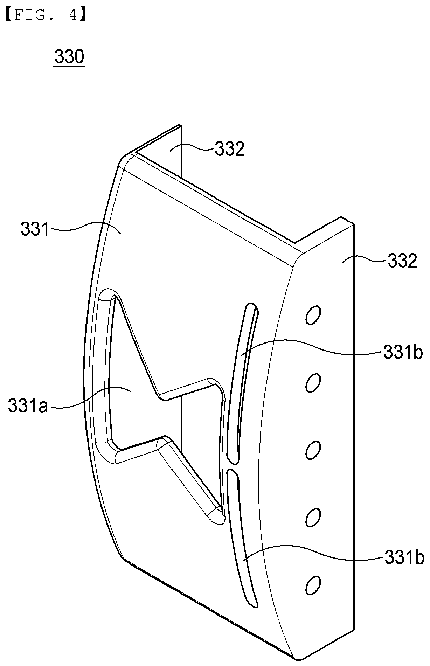

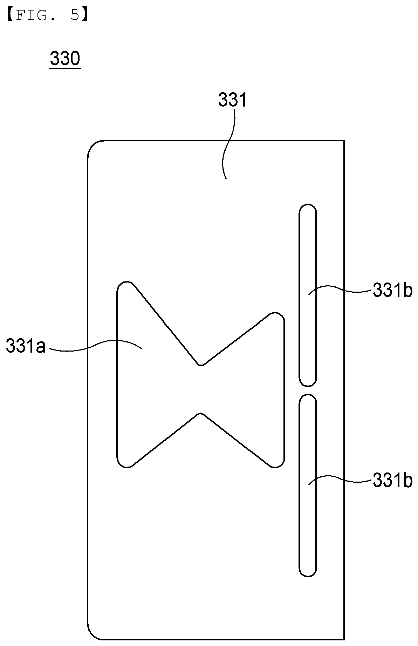

FIG. 4 is a perspective view of the pattern jig constituting the electrode machining apparatus according to the present invention, and FIG. 5 is a front view of the pattern jig shown in FIG. 4.

The pattern jig will be described with reference to FIGs. 4 and 5. The pattern jig 330 may include a first surface 331 and a pair of second surfaces 332 located at opposite sides of the first surface 331.

The first surface 331 is in tight contact with a part or the entirety of the uncoated portion 120, is curved so as to have a predetermined curvature in a circumferential direction of the second drum 320 when the pattern jig is mounted to the second drum 320, is provided in the middle thereof with a first opening 331a of a predetermined shape, through which a laser beam passes, and is provided along one of opposite edges thereof with a second opening 331b.

Here, the first surface 331 of the pattern jig 330 is preferably as smooth as possible. In other words, since the pattern jig 330 is mounted to the stationary second drum 320, the first surface rubs against the uncoated portion 120 that is continuously moved, whereby the uncoated portion 120 may be damaged.

Therefore, the first surface 331 of the pattern jig 330 is preferably made of a metal material, and more preferably has an arithmetic mean roughness Ra of 0.05 nm or less.

The second surface 332 is inserted into and fixed to the second drum 320 when the pattern jig 330 is mounted to the second drum 320.

The pattern jig 330 having the above structure serves to support the uncoated portion 120 and to prevent the second drum 320 from being damaged by laser beam radiated for cutting, a description of which will follow.

Referring back to FIGs. 2 and 3, the laser radiator 400 is configured to radiate a laser beam along the uncoated portion 120 of the electrode sheet 100, more specifically along the edge of the first opening 331a of the pattern jig 330, to cut the uncoated portion such that an electrode tab 121 is formed.

The wavelength of the laser beam radiated by the laser radiator 400 may be a wavelength within an ultraviolet range, a green range, or an infrared range. As an example, the laser beam may have an infrared wavelength of 1000 nm to 1100 nm; however, the present invention is not limited thereto as long as the electrode tab 121 can be formed at the uncoated portion 120 by the laser beam.

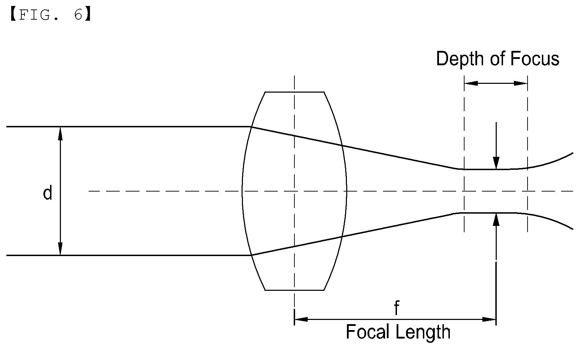

FIG. 6 is a view illustrating the depth of focus of the laser beam. When laser machining is carried out using the laser beam, it is necessary for the machining area to be located in the depth of focus (DOF) defined by Relational expression 1 below. The reason for this is that, if the machining area is outside the DOF, the machining area is not cut or the quality of the cut surface is reduced even if the machining area is on the movement path of the laser beam.

$$\mathrm{DOF} = \frac{8\lambda\mathrm{M}^2}{\pi}\sqrt{\mathrm{p}^2 - 1}\ \left(\frac{\mathrm{f}}{\mathrm{d}}\right)^2 \quad \texttt{(Relational expression 1)}$$

where $\lambda$ is the wavelength of the laser beam, $M^2$ is the mode parameter of the laser beam (beam mode parameter), p is the tolerance factor, which is 1.05, f is the focal length of a lens, and d is the diameter of the laser beam that is radiated (input beam parameter).

Of course, determination of the DOF is not limited by Relational expression 1 above, and any known relational expression for determining the DOF may be used.

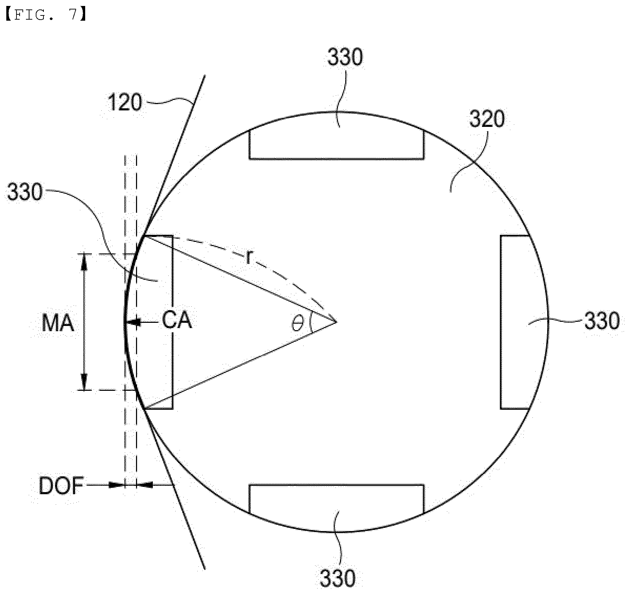

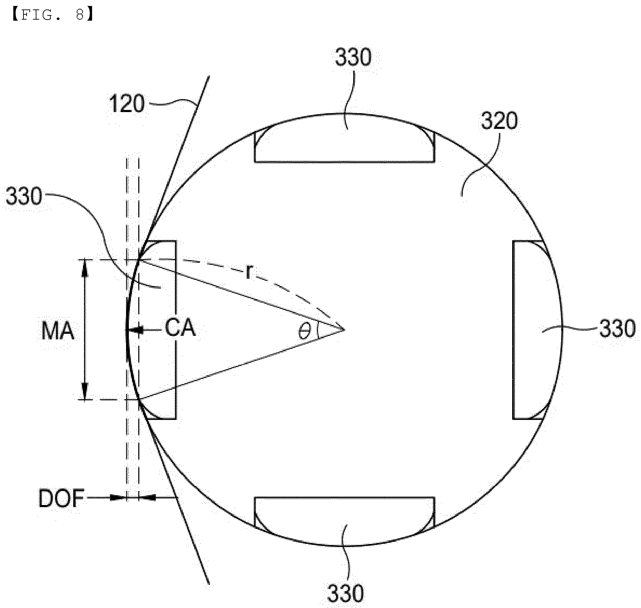

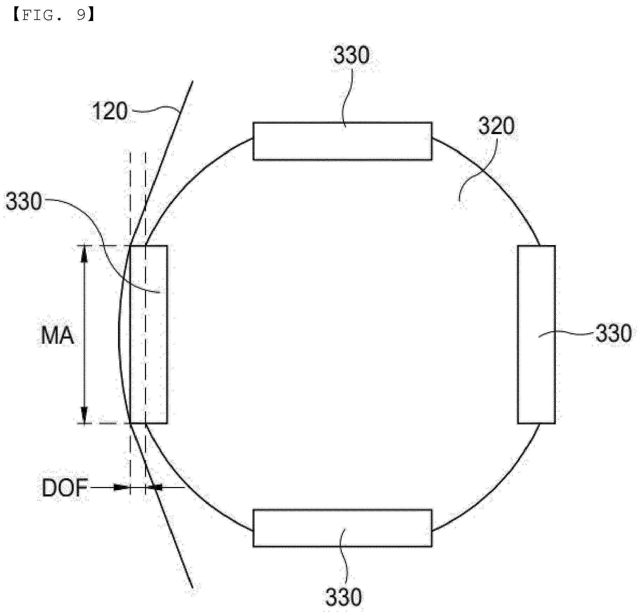

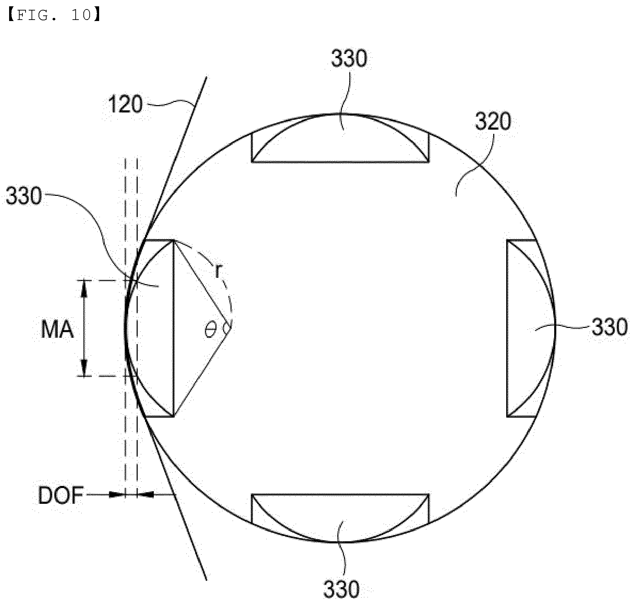

FIG. 7 is a view showing a first example of the relationship between the depth of focus and a machining area in the electrode machining apparatus according to the present invention, FIG. 8 is a view showing a second example of the relationship between the depth of focus and the machining area in the electrode machining apparatus according to the present invention, FIG. 9 is a view showing a third example of the relationship between the depth of focus and the machining area in the electrode machining apparatus according to the present invention, and FIG. 10 is a view showing a fourth example of the relationship between the depth of focus and the machining area in the electrode machining apparatus according to the present invention.

When the pattern jig 330 is mounted to the second drum 320, only the machining area MA corresponding to the depth of focus (DOF) may be properly cut.

Of course, as can be seen from Relational expression 1 above, the wavelength of the laser beam or the focal length of the lens may be adjusted to change depth of focus (DOF), and therefore the machining area MA is also changed.

Here, it is preferable for at least a part of the first surface 331 of the pattern jig 330 to have the same curvature as the second drum 320 while overlapping the depth of focus (DOF), and it is more preferable for the entirety of the first surface 331 of the pattern jig 330 to have the same curvature as the second drum 320 while at least a part of the first surface 331 overlaps the depth of focus (DOF) (see FIGs. 7 and 8).

In other words, based on the section, if the first surface 331 of the pattern jig 330 is flat, the uncoated portion 120 may be easily damaged by corners of the pattern jig 330, and the pattern jig 330 and the uncoated portion 120 may not be in tight contact with each other, whereby the cut edge may not be smooth (see FIG. 9).

In addition, if the curvature of the first surface 331 of the pattern jig 330 is much less than the curvature of the second drum 320, not only is the machining area MA reduced, but the uncoated portion 120 is also more likely to be damaged due to a step in the vicinity of the coupling part between the second drum 320 and the pattern jig 330 (see FIG. 9).

Meanwhile, the curvatures of the second drum 320 and the pattern jig 330 may be determined by considering the depth of focus (DOF) of the laser radiator and the machining area (MA). At this time, it is recommended to secure data about a machining area MA that is not damaged in advance, since the friction area between the uncoated portion 120 and the second drum 320 may increase, whereby the uncoated portion 120 may be damaged, if the machining area MA is excessively wide.

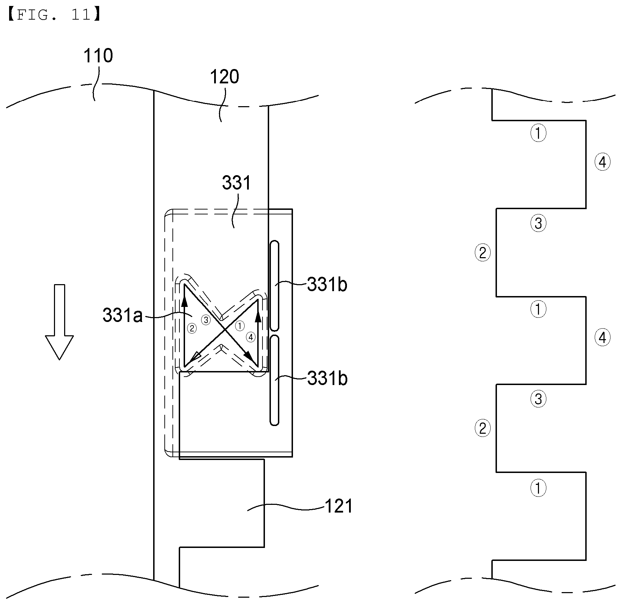

FIG. 11 is a perspective view of an electrode machining apparatus according to a second embodiment of the present invention. The electrode machining apparatus according to the second embodiment of the present invention is identical to the electrode machining apparatus according to the first embodiment except that a detection unit is further provided, and therefore only the difference in construction will be described below.

As previously described, a laser beam travels along the edge of the first opening 331a of the pattern jig 330 to form an electrode tab. During a long period of continuous operation, however, the position of the laser radiator 400, the position of the drum 300, or the position of the pattern jig 330 may change, which may lead to a defected electrode sheet.

For this reason, it is preferable to further provide a detection unit 500 configured to determine whether the laser beam moves accurately along the edge of the first opening 331a of the pattern jig 330, and the detection unit 500 may be a light meter.

For example, in normal operation, the laser beam does not hit the pattern jig 330 because the laser beam moves along the inside of the edge of the first opening 331a of the pattern jig 330, but in abnormal operation, at least a part of the laser beam hits the pattern jig 330.

When the laser radiator 400 or the drum 300 including the pattern jig 330 is out of a predetermined position, therefore, the laser beam that hits the pattern jig 330 is reflected, resulting in an increase in light quantity compared to the case in which machining proceeds normally.

Here, the light meter is known in the art, and therefore a detailed description thereof will be omitted.

Although not shown in the figure, it is preferable to further provide a monitoring unit (not shown) configured to receive the result of detection performed by the detection part 500 and to transmit a signal to an operator when the received light quantity deviates from a predetermined light quantity range.

Furthermore, it is more preferable for the detection unit 500 and the laser radiator 400 to be connected to each other via a connection member (not shown) such that the detection part 500 can move together with the laser radiator 400 along the movement path of the laser radiator.

Next, a method of machining an electrode sheet using the above-described machining apparatus will be described.

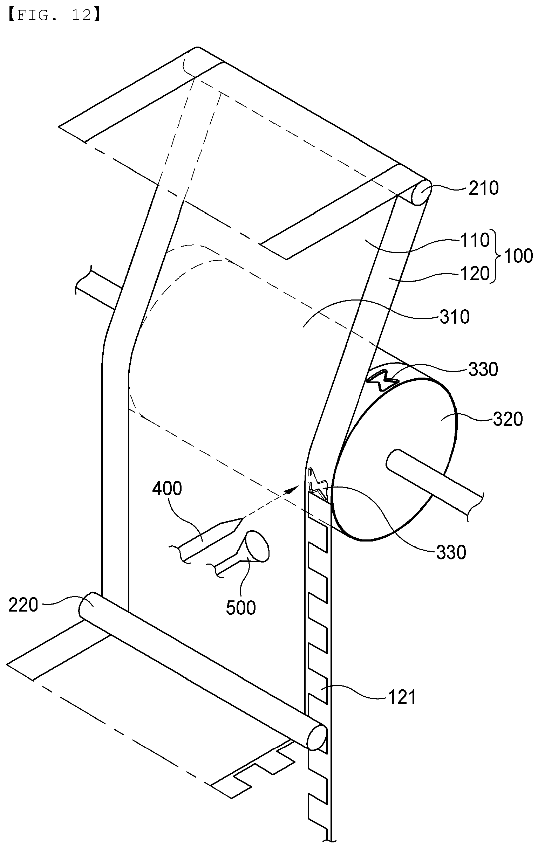

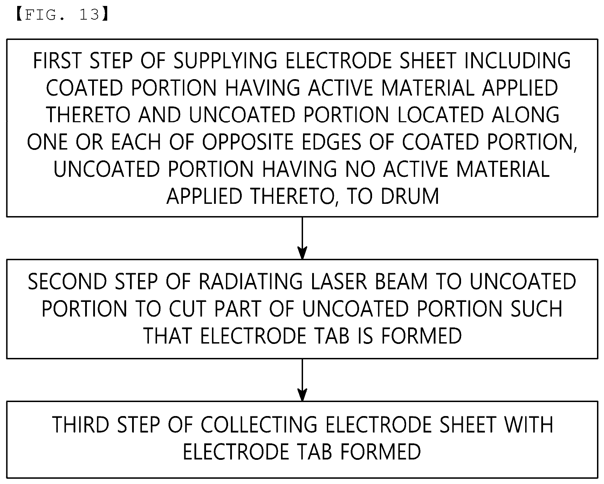

FIG. 12 is a flowchart illustrating an electrode sheet machining method according to the present invention, and FIG. 13 is a view illustrating the movement path of a laser beam during machining of an electrode sheet.

The electrode sheet machining method according to the present invention may include a first step of supplying an electrode sheet 100 including a coated portion 110 having an active material applied thereto and a uncoated portion 120 located along one or each of opposite edges of the coated portion 110, the uncoated portion having no active material applied thereto, to a drum 300, a second step of radiating a laser beam to the uncoated portion 120 to cut a part of the uncoated portion 120 such that an electrode tab 121 is formed, and a third step of collecting the electrode sheet 100 with the electrode tab 121 formed.

In the first step, a first drum 310 is continuously rotated while a second drum 320 located at one side or opposite sides of the first drum 310 is stationary without rotation, and a pattern jig 330 having a first opening 331a formed therein is mounted to the second drum 320.

The electrode sheet is supplied in the state in which the coated portion 110 is in tight contact with the first drum 310 and a part or the entirety of the uncoated portion 120 is in tight contact with the pattern jig 330 and the second drum 320.

In the second step, the laser radiator is driven such that a laser beam for cutting moves along a predetermined path, more specifically an approximately "figure eight" shaped path formed along an inner edge of the first opening 331a of the pattern jig 330, as shown in FIG. 13. At this time, the electrode sheet 100 is in a state of continuous movement, and therefore electrode tabs 121 of the same shape are continuously formed.

Here, it is obvious that the movement path of the laser beam must be within the machining area corresponding to the depth of focus (DOF).

Meanwhile, it is obvious that, when the shape of the electrode tab 121 is to be changed, the movement path and movement speed of the laser beam and/or the shape of the first opening 331a may be changed.

In the third step of collecting the electrode sheet 100 with the electrode tab 121 formed, the electrode sheet 100 with the electrode tab 121 formed and the cut-out uncoated portion are collected.

Meanwhile, it is preferable to further perform a step of determining whether the laser beam moves along the edge of the first opening 331a of the pattern jig 330 between the second step and the third step, and it is more preferable to perform control such that a signal is transmitted to an operator in case of abnormal operation.

As described above, the light quantity of the laser beam reflected by the electrode sheet 100 after radiation is measured continuously or discontinuously to determine whether the electrode sheet machining process is normally carried out.

Of course, information about the light quantity of the laser beam reflected after radiation in normal operation may be secured in advance, and if light quantity in any operation is higher than the light quantity in normal operation, the operation may be determined to be abnormal.

When the uncoated portion is notched using the laser beam, as described above, the notched section is neither crushed nor curled, whereby it is possible to prevent defects in the electrode tab.

In addition, since the laser beam moves within the area that overlaps the depth of focus (DOF), it is possible to secure stable cutting quality and to prevent unnecessary radiation, and therefore it is possible to reduce machining costs.

Those skilled in the art to which the present invention pertains will appreciate that various applications and modifications are possible within the category of the present invention based on the above description.

(Description of Reference Symbols)

100: Electrode sheet
110: Coated portion
120: Uncoated portion
121: Electrode tab
200: Transfer roller
210: First transfer roller
220: Second transfer roller
300: Drum
310: Rotary drum
320: Stationary drum
330: Pattern jig
331: First surface
331a: First opening 331b: Second opening
332: Second surface
400: Laser radiator
500: Detection unit
MA: Machining area
r: Radius
CA: Circular arc

## Claims

1. An electrode sheet machining apparatus comprising:

    a transfer roller configured to supply an electrode sheet;
    a drum configured to be in tight contact with one surface of the supplied electrode sheet; and
    a laser radiator configured to radiate a laser beam toward the drum,
    wherein the drum comprises:

        a first drum configured to be rotated together with the supplied electrode sheet;
        a second drum located at one side or opposite sides of the first drum, the second drum configured to rotate or remain stationary; and
        a pattern jig removably mounted to the second drum, the pattern jig having a first opening configured to allow the laser beam to pass therethrough.

2. The electrode sheet machining apparatus according to claim 1, wherein the electrode sheet comprises:

    a coated portion having an active material applied thereto; and
    an uncoated portion having no active material applied thereto, and
    wherein the second drum is configured to be located by at least a part of the uncoated portion of the electrode sheet.

3. The electrode sheet machining apparatus according to claim 2, wherein the pattern jig comprises:

    a first surface in tight contact with a part of the uncoated portion, the first surface having the first opening; and
    a pair of second surfaces located at opposite sides of the first surface.

4. The electrode sheet machining apparatus according to claim 3, wherein the first surface of the pattern jig has a curvature in a circumferential direction of the second drum.

5. The electrode sheet machining apparatus according to claim 4, wherein at least a part of the first surface of the pattern jig overlaps a depth of focus (DOF) section of the laser beam defined by Relational expression 1 below:

$$\mathrm{DOF} = \frac{8\lambda\mathrm{M}^{2}}{\pi}\sqrt{\mathrm{p}^{2}-1}\left(\frac{\mathrm{f}}{\mathrm{d}}\right)^{2} \quad \texttt{(Relational expression 1)}$$

where $\lambda$ is a wavelength of the laser beam, $M^2$ is a mode parameter of the laser beam (beam mode parameter), p is a tolerance factor, f is a focal length of a lens, and d is a diameter of the laser beam that is radiated (input beam parameter).

6. The electrode sheet machining apparatus according to claim 4, wherein at least a part of the first surface of the pattern jig has the same curvature as the second drum.

7. The electrode sheet machining apparatus according to claim 6, wherein the curvature of the first surface and the curvature of the second drum are the same.

8. The electrode sheet machining apparatus according to claim 1, wherein

    the transfer roller comprises a first transfer roller and a second transfer roller, and
    the first transfer roller is located before the drum and the second transfer roller is located after the drum and configured to change a transfer path of the electrode sheet.

9. The electrode sheet machining apparatus according to claim 5, further comprising a detection unit configured to determine whether the laser beam moves along an edge of the first opening of the pattern jig.

10. The electrode sheet machining apparatus according to claim 9, wherein the detection unit is a light meter.

11. An electrode sheet machining method comprising:

    a first step of supplying an electrode sheet to a drum, the electrode sheet comprising a coated portion having an active material applied thereto and an uncoated portion located along one or each of opposite edges of the coated portion, the uncoated portion having no active material applied thereto;
    a second step of radiating a laser beam to the uncoated portion to cut a part of the uncoated portion forming an electrode tab; and
    a third step of collecting the electrode sheet with the electrode tab,
    wherein the drum comprises:

        a first drum in tight contact with the coated portion of the supplied electrode sheet;
        a second drum located at one side or opposite sides of the first drum, the second drum being in tight contact with at least a part of the uncoated portion; and
        a pattern jig removably mounted to the second drum, the pattern jig having a first opening configured to allow the laser beam to pass therethrough.

12. The electrode sheet machining method according to claim 11, wherein

    a first surface of the pattern jig in tight contact with a part of the uncoated portion is curved, and
    the second step includes radiating the laser beam to a depth of focus (DOF) section of the laser beam defined by Relational expression 1 below:

$$\mathrm{DOF} = \frac{8\lambda\mathrm{M}^{2}}{\pi}\sqrt{\mathrm{p}^{2}-1}\left(\frac{\mathrm{f}}{\mathrm{d}}\right)^{2} \quad \texttt{(Relational expression 1)}$$

    where $\lambda$ is a wavelength of the laser beam, $M^2$ is a mode parameter of the laser beam (beam mode parameter), p is a tolerance factor, f is a focal length of a lens, and d is a diameter of the laser beam that is radiated (input beam parameter).

13. The electrode sheet machining method according to claim 12, wherein at least a part of the first surface of the pattern jig overlaps the depth of focus (DOF) section of the laser beam.

14. The electrode sheet machining method according to claim 12, wherein, in the second step, at least a part of the laser beam is radiated while moving along an inner edge of the first opening of the pattern jig.

15. The electrode sheet machining method according to claim 14, further comprising a step of determining whether the laser beam moves along the edge of the first opening of the pattern jig between the second step and the third step.

【FIG. 1】

【FIG. 2】

【FIG. 3】

【FIG. 4】

330

【FIG. 5】

330

331

331a

331b

331b

【FIG. 6】

Depth of Focus

d

f
Focal Length

【FIG. 7】

【FIG. 8】

【FIG. 9】

【FIG. 10】

【FIG. 11】

【FIG. 12】

【FIG. 13】

FIRST STEP OF SUPPLYING ELECTRODE SHEET INCLUDING COATED PORTION HAVING ACTIVE MATERIAL APPLIED THERETO AND UNCOATED PORTION LOCATED ALONG ONE OR EACH OF OPPOSITE EDGES OF COATED PORTION, UNCOATED PORTION HAVING NO ACTIVE MATERIAL APPLIED THERETO, TO DRUM

↓

SECOND STEP OF RADIATING LASER BEAM TO UNCOATED PORTION TO CUT PART OF UNCOATED PORTION SUCH THAT ELECTRODE TAB IS FORMED

↓

THIRD STEP OF COLLECTING ELECTRODE SHEET WITH ELECTRODE TAB FORMED

## INTERNATIONAL SEARCH REPORT

International application No.

**PCT/KR2024/002981**

### A.    CLASSIFICATION OF SUBJECT MATTER

**H01M 4/04**(2006.01)i; **H01M 50/536**(2021.01)i; **B23K 26/08**(2006.01)i; **B23K 26/062**(2014.01)i; **B23K 26/38**(2006.01)i

According to International Patent Classification (IPC) or to both national classification and IPC

### B.    FIELDS SEARCHED

Minimum documentation searched (classification system followed by classification symbols)

H01M 4/04(2006.01); B23K 26/042(2014.01); B23K 26/38(2006.01); B23K 26/70(2014.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 이송롤러(transporting roller), 노칭(notching), 레이저(laser), 패턴 (pattern), 절개부(cutting portion), 무지부(uncoated portion), 활물질(active material), 드럼(drum), 초점심도(depth of focus), 검출(detection)

### C.    DOCUMENTS CONSIDERED TO BE RELEVANT

| Category* | Citation of document, with indication, where appropriate, of the relevant passages | Relevant to claim No. |
|---|---|---|
| X | KR 10-2158708 B1 (DATECHNOLOGY CO., LTD.) 22 September 2020 (2020-09-22) See paragraphs [0002], [0003], [0024]-[0032] and [0043]-[0047]; and figures 1-5. | 1-4,6-8,11 |
| Y | | 5,9,10,12-15 |
| Y | KR 10-2015-0050868 A (LG CHEM, LTD.) 11 May 2015 (2015-05-11) See paragraphs [0029]-[0046]; and figures 1 and 2. | 5,9,10,12-15 |
| Y | KR 10-2020-0133942 A (DE&T CO., LTD.) 01 December 2020 (2020-12-01) See paragraphs [0042] and [0055]-[0058]; and figures 4 and 5. | 9,10,14,15 |
| A | KR 10-2021-0154051 A (LG ENERGY SOLUTION, LTD.) 20 December 2021 (2021-12-20) See claims 1-10. | 1-15 |
| A | WO 2021-261254 A1 (PANASONIC CORPORATION) 30 December 2021 (2021-12-30) See claims 1-6. | 1-15 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 June 2024** | **10 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
Information on patent family members

International application No.

**PCT/KR2024/002981**

| Patent document cited in search report | | | Publication date (day/month/year) | Patent family member(s) | | | Publication date (day/month/year) |
|---|---|---|---|---|---|---|---|
| KR | 10-2158708 | B1 | 22 September 2020 | CN | 113770538 | A | 10 December 2021 |
| | | | | KR | 10-2158708 | B1 | 22 September 2020 |
| | | | | WO | 2021-251753 | A1 | 16 December 2021 |
| KR | 10-2015-0050868 | A | 11 May 2015 | CN | 104755219 | A | 01 July 2015 |
| | | | | EP | 2889103 | A1 | 01 July 2015 |
| | | | | JP | 2016-505384 | A | 25 February 2016 |
| | | | | JP | 6059819 | B2 | 11 January 2017 |
| | | | | KR | 10-1680416 | B1 | 12 December 2016 |
| | | | | US | 10005157 | B2 | 26 June 2018 |
| | | | | US | 2016-0263705 | A1 | 15 September 2016 |
| | | | | WO | 2015-065105 | A1 | 07 May 2015 |
| KR | 10-2020-0133942 | A | 01 December 2020 | KR | 10-2270797 | B1 | 30 June 2021 |
| KR | 10-2021-0154051 | A | 20 December 2021 | | None | | |
| WO | 2021-261254 | A1 | 30 December 2021 | JP | 2023-102796 | A | 26 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230031183
- KR 20240028734

- KR 20210130541